# EUROPEAN PATENT APPLICATION

(11) **EP 4 775 859 A1**
(43) Date of publication of application: **15.07.2026**
(21) Application number: 24862061.9
(22) Date of filing: 06.09.2024
(51) Int. Cl.: F16K 31/04, F16K 31/53, H02K 7/116

(54) **CONTROL APPARATUS AND ELECTRIC VALVE**

(30) Priority: 07.09.2023 CN 202311153147; 07.09.2023 CN 202311154963
(71) Applicant: Zhejiang Sanhua Automotive Components Co., Ltd., Hangzhou, Zhejiang 310018 (CN)
(72) Inventor: WANG, Lixin, Hangzhou, Zhejiang 310018 (CN); ZHU, Jinghui, Hangzhou, Zhejiang 310018 (CN); YUAN, Hong, Hangzhou, Zhejiang 310018 (CN); HAO, Zhenzhen, Hangzhou, Zhejiang 310018 (CN); LIANG, Shuiqing, Hangzhou, Zhejiang 310018 (CN)
(74) Representative: Maikowski & Ninnemann Patentanwälte Partnerschaft mbB
(86) International application number: PCT/CN2024/117340
(87) International publication number: WO 2025/051223

(57) **Abstract**

A control apparatus and an electric valve. The control apparatus comprises a transmission assembly, a stator assembly and a rotor assembly, the stator assembly being positioned at the periphery of the rotor assembly. The transmission assembly comprises a first gear, and the rotor assembly has a transmission connection with the first gear. The control apparatus comprises a first shaft part, and at least a portion of the first gear is located at the periphery of the first shaft part. The stator assembly comprises an outer peripheral part, and the stator assembly has a groove recessed into the outer peripheral part along radial direction of the stator assembly, a portion of the first shaft part being located in the groove. Thus the distance between the first shaft part and the rotor assembly is decreased, such that the radius of the first gear can be reduced, and the size of the control apparatus is further reduced.

## Description

The present application claims priorities to the following Chinese Patent Applications: Chinese Patent Application No. 202311153147.X, titled "CONTROL APPARATUS AND ELECTRIC VALVE", filed with the China National Intellectual Property Administration on September 7, 2023; and Chinese Patent Application No. 202311154963.2, titled "CONTROL APPARATUS AND ELECTRIC VALVE", filed with the China National Intellectual Property Administration on September 7, 2023, both of which are incorporated herein by reference in there entireties.

### FIELD

The present application relates to the field of electrical technology, and in particular to a control apparatus and an electric valve.

### BACKGROUND

The control apparatus may be applied to the electric valve. The control apparatus generally includes a motor and a gear. An output end of the motor is meshed with the gear. The gear, with a larger radius, occupies more space in a radial direction of the gear, thereby increasing the overall dimensions of the control apparatus.

### SUMMARY

In view of this, an object of the present application is to provide a control apparatus and an electric valve, which may reduce the dimensions of the control apparatus.

A control apparatus is provided according to an embodiment of the present application, including a transmission assembly, a stator assembly and a rotor assembly. The stator assembly is located radially outside the rotor assembly. The transmission assembly includes a first gear, which is in transmission connection with the rotor assembly. The control apparatus includes a first shaft, and at least a portion of the first gear is located radially outside the first shaft. The stator assembly includes an outer circumferential part, and the stator assembly has a first groove. In a radial direction of the stator assembly, the first groove is recessed into the outer circumferential part, and a portion of the first shaft is located in the first groove.

An electric valve is provided according to an embodiment of the present application, including the above-mentioned control apparatus.

In the control apparatus and the electric valve provided according to the embodiments of the present application, in the radial direction of the stator assembly, a groove is recessed into the outer circumferential part of the stator assembly, and a portion of the first shaft is located in the groove, so that a distance between the first shaft and the rotor assembly is smaller, thereby reducing the radius of the first gear and further reducing the size of the control apparatus.

### BRIEF DESCRIPTION OF THE DRAWINGS

FIG. 1 is a schematic perspective structural view showing an embodiment of a control apparatus according to the present application;
FIG. 2 is a schematic perspective structural view showing a portion of the control apparatus shown in FIG. 1;
FIG. 3 is a schematic cross-sectional view of the control apparatus shown in FIG. 1;
FIG. 4 is a schematic perspective structural view showing a portion of the control apparatus shown in FIG. 1;
FIG. 5 is an schematic exploded structural view showing a portion of the control apparatus shown in FIG. 4;
FIG. 6 is a schematic perspective structural view showing a stator assembly of the control apparatus shown in FIG. 5;
FIG. 7 is a schematic structural view showing a portion of the control apparatus shown in FIG. 4 from one perspective;
FIG. 8 is a schematic partial cross-sectional view showing a portion of the control apparatus shown in FIG. 7 taken along line A-A;
FIG. 9 is an schematic exploded view of a rotor assembly shown in FIG. 5;
FIG. 10 is a schematic perspective structural view showing a stator core of the rotor assembly shown in FIG. 6;
FIG. 11 is a schematic structural view of the stator core shown in FIG. 10 from one perspective;
FIG. 12 is a schematic perspective structural view showing an embodiment of an electric valve according to the present application;
FIG. 13 is an schematic exploded view of the electric valve shown in FIG. 12;
FIG. 14 is a schematic structural view showing a control apparatus of the electric valve shown in FIG. 13 from one perspective;
FIG. 15 is a schematic structural view showing a valve body assembly and a valve core assembly shown in FIG. 13 from one perspective;
FIG. 16 is a schematic structural view showing a portion of the control apparatus shown in FIG. 13 from one perspective;
FIG. 17 is a schematic structural view of the electric valve shown in FIG. 12 from one perspective; and
FIG. 18 is a schematic cross-sectional view of the electric valve shown in FIG. 17 taken along line B-B.

Reference numerals are described as follows:

| | | | |
|---|---|---|---|
| 100 | electric valve; | 1 | valve body assembly; |
| 11 | first side; | 12 | second mounting hole; |
| 13 | second position-limiting component; | 2 | valve core assembly; |
| 21 | valve shaft; | 22 | valve ball; |
| 3 | control apparatus; | 31 | stator assembly; |
| 312 | first groove; | 313 | first end face part; |
| 314 | first protruding part; | 315 | stator core; |
| 3151 | stator yoke part; | 3152 | stator tooth part; |
| 3153 | first side wall; | 316 | outer shell; |
| 317 | winding; | 38 | first mounting part; |
| 381 | first through-hole; | 39 | position-limiting groove; |
| 391 | bottom wall; | 392 | side wall; |
| 32 | rotor assembly; | 321 | support frame; |
| 324 | second groove; | 322 | permanent magnet; |
| 323 | protrusion; | 33 | transmission assembly; |
| 331 | first gear; | 332 | output gear; |
| 34 | housing; | 341 | second protruding part; |
| 342 | first mounting hole; | 343 | rib; |
| 37 | second mounting part; | 371 | second through-hole; |
| 30 | cavity; | 35 | first shaft; |
| 36 | first position-limiting component; | 361 | large-diameter part; |
| 362 | small-diameter part; | 311 | outer circumferential part; |
| 3155 | inner circumferential part. | | |

### DETAILED DESCRIPTION OF THE EMBODIMENTS

The embodiments herein will be described in detail below with reference to the accompanying drawings.

In order to make the objects, technical solutions and advantages of the present application more clear, the present application will be further described in detail below in conjunction with the accompanying drawings and specific embodiments. Herein, relational terms such as "first" and "second" are only used to distinguish one component from another having the same name, and do not necessarily require or imply that there is any such actual relationship or order between these components. It should be noted that the "position-limited connection" in the present application includes threaded connection, snap-fit connection or the like, and the "fixed connection" in the present application includes welding, adhesive bonding, vulcanization fixation, riveting, insert injection molding or the like.

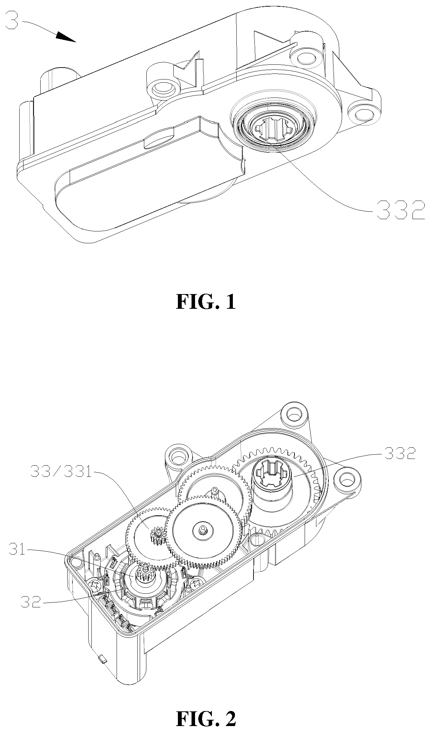

A control apparatus 3 is shown in FIGS. 1 to 8, including a transmission assembly 33, a stator assembly 31 and a rotor assembly 32. The stator assembly 31 is arranged around an outer periphery of the rotor assembly 32. The transmission assembly 33 includes a first gear 331, which is in transmission connection with the rotor assembly 32. The control apparatus 3 includes a first shaft 35, and at least a portion of the first gear 331 is arranged around an outer periphery of the first shaft 35. The first gear 331 is in sliding fit with the first shaft 35, so that the first gear 331 is rotatable around the first shaft 35. The stator assembly 31 includes multiple windings 317, which may be energized to drive the rotor assembly 32 to rotate.

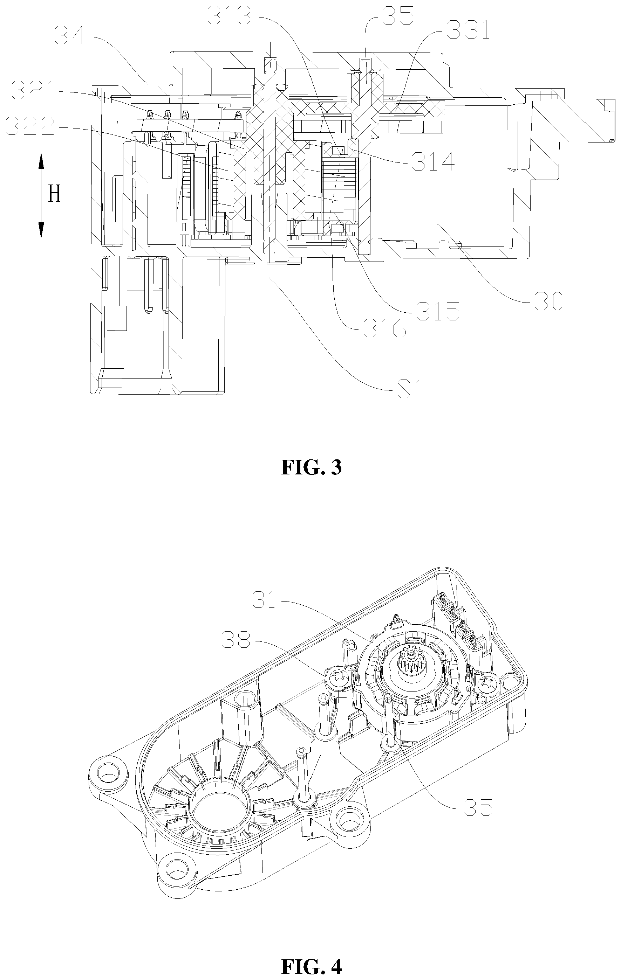

An axial direction of the stator assembly 31 is defined, and the rotor assembly 32 is rotatable about a rotation axis of the rotor assembly 32. The axial direction of the stator assembly 31 is the same as an extending direction of the rotation axis of the rotor assembly 32. The axial direction of the stator assembly 31 is indicated by H in FIG. 3. A radial direction of the stator assembly 31 is defined, which is perpendicular to the axial direction of the stator assembly 31. In this embodiment, a central axis of the stator assembly 31 is defined, which is substantially coincident with the rotation axis of the rotor assembly 32. The central axis of the stator assembly 31 is indicated by S1 in FIG. 3.

As shown in FIGS. 2 to 6, the stator assembly 31 includes an outer circumferential part 311, and the stator assembly 31 has a first groove 312. In the radial direction of the stator assembly 31, the first groove 312 is recessed into the outer circumferential part 311, and a portion of the first shaft 35 is located in the first groove 312. Since a portion of the first shaft 35 is located in the first groove 312, a distance between the first shaft 35 and the central axis of the rotor assembly 32 is reduced. This allows for a decrease in the radius of the first gear 331, thereby reducing the space occupied by the first gear 331, and, consequently, reducing the overall dimensions of the control apparatus 3. In addition, compared with the solution where the first shaft 35 is arranged between two of the windings 317 of the stator assembly 31, the solution proposed in the present application may lower the risk of the winding 317 being scratched by the first shaft 35 during the mounting of the stator assembly 31, which reduces the assembly difficulty and also leaves a space for the windings 317, thereby improving the groove fill factor of the stator assembly 31.

In this embodiment, an extending direction of the first shaft 35 is parallel to an axial direction of the stator assembly 31, and the outer circumferential part 311 of the stator assembly 31 has a cylindrical surface-like shape. In the radial direction of the stator assembly 31, a portion of the first shaft 35 is farther away from the central axis of the stator assembly 31 than the outer circumferential part 311. In other words, a portion of the first shaft 35 is not disposed in the complete cylindrical surface of the outer circumferential part 311.

As shown in FIG. 3, the control apparatus 3 includes a housing 34, which has a cavity 30. The first gear 331 is located in the cavity 30, and the first shaft 35 is fixedly connected to the housing 34. At least a portion of the first gear 331 is located between the housing 34 and the stator assembly 31 in the axial direction of the stator assembly 31. One end of the first gear 331 in the axial direction is in abutment with or clearance fit with the stator assembly 31, and the other end of the first gear 331 in the axial direction is in abutment with or clearance fit with a wall of the cavity 30, so that in the axial direction of the stator assembly 31, two axial ends of the first gear 331 are limited, thereby limiting the axial movement of the first gear 331 and reducing noise. In other embodiments, the first shaft 35 may be integrally formed with the housing 34.

Specifically, as shown in FIGS. 3 to 5, the stator assembly 31 includes a first end face part 313. At least a portion of the first end face part 313 faces the first gear 331 in the axial direction of the stator assembly 31. The stator assembly 31 includes a first protruding part 314, which protrudes from the first end face part 313. A top of the first protruding part 314 is in sliding fit with the first gear 331. The provision of the first protruding part 314 enables axial position-limiting of the first gear 331 while reducing the axial dimension of a main body of the stator assembly 31. In addition, the first protruding part 314 with a smaller top surface area may reduce the friction between the first gear 331 and the stator assembly 31. A first plane, which is perpendicular to the axial direction of the stator assembly 31, is defined. The first protruding part 314 is located around the outer periphery of the first shaft 35, and a projection of the first protruding part 314 on the first plane is substantially arc-shaped.

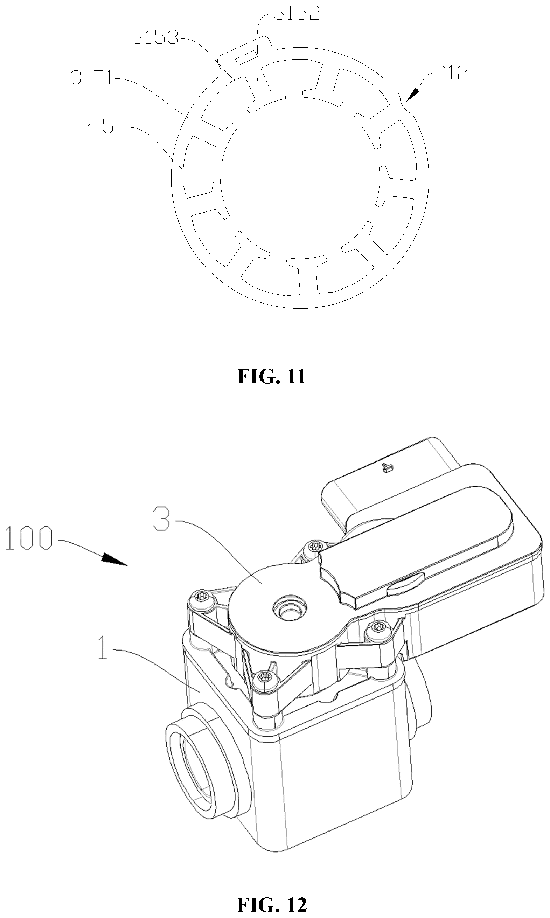

The stator assembly 31 includes a stator core 315 and an outer shell 316. The outer shell 316 is made of insulating material. At least a portion of the outer shell 316 is located around the stator core 315. The outer shell 316 is configured to protect and insulate the stator core 315. As shown in FIG. 11, a portion of the first groove 312 is recessed into the outer circumferential part of the stator core 315 in the radial direction of the stator assembly 31, so that the first shaft 35 is closer to the rotor assembly 32, further reducing the radial dimension of the first gear 331.

As shown in FIGS. 3 to 5, the outer shell 316 is made of plastic material, and the outer shell 316 is fixedly connected to the stator core 315 through an insert injection molding process. The first gear 331 is made of plastic material, and one end of the first gear 331 is in sliding fit with the outer shell 316. In this way, compared with the friction between the first gear 331 and a metal stator core 315, the plastic outer shell 316 and the first gear 331 have similar hardness levels, which may lower the risk of the first gear 331 being scratched. In addition, the injection molding process facilitates the formation of the first protruding part 314, which may form a portion of the outer shell 316.

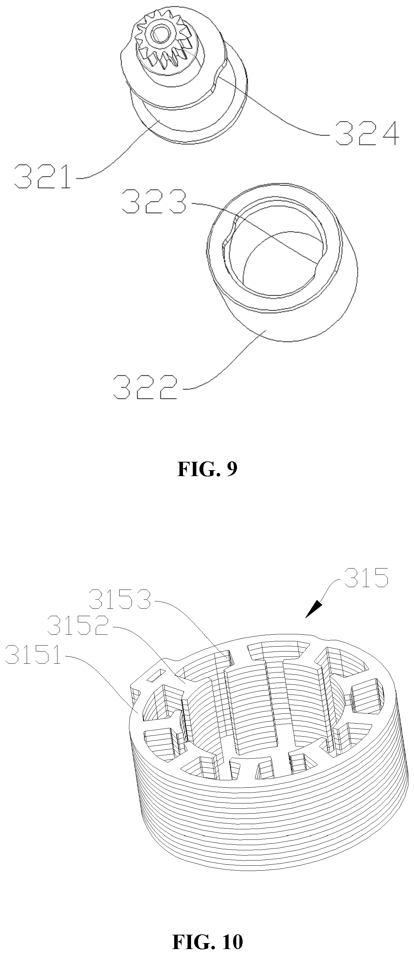

As shown in FIGS. 10 and 11, the stator core 315 includes a stator yoke part 3151 and stator tooth parts 3152. The rotor assembly 32 is surrounded by the stator yoke part 3151. The stator yoke part 3151 includes an inner circumferential part 3155, which faces the rotor assembly 32 in the radial direction of the stator assembly 31. The inner circumferential part 3155 includes a first side wall 3153, and each stator tooth part 3152 extends from the first side wall 3153 towards the rotor assembly 32 in the radial direction of the stator assembly 31. The first side wall 3153 is planar, and the first side wall 3153 is substantially perpendicular to an extending direction of the stator tooth part 3152. The stator assembly 31 includes windings 317, which are located around the stator tooth parts 3152. Since the first side wall 3153 is planar and is substantially perpendicular to the extending direction of the stator tooth part 3152, it facilitates the winding operation of the windings 317 compared with an arc-shaped first side wall 3153. The expression "substantially perpendicular" means that an angle between the two ranges from 80 degrees to 100 degrees.

As shown in FIG. 3 and FIG. 9, the rotor assembly 32 includes a support frame 321 and a permanent magnet 322. The permanent magnet 322 is circumferentially arranged around the support frame 321. An inner circumferential part of the permanent magnet 322 is in the shape of a quasi-cylindrical surface. The permanent magnet 322 includes a protrusion 323, which extends outward from the inner circumferential part of the permanent magnet 322 in a radial direction of the rotor assembly 32. An outer circumferential part of the support frame 321 faces the inner circumferential part of the permanent magnet 322. The support frame 321 includes a second groove 324 that is recessed at the outer circumferential part of the support frame 321. At least a portion of the protrusion 323 is located in the corresponding second groove 324 and is fitted with a wall of the second groove 324. The fact that at least a portion of the protrusion 323 is located in the second groove 324 and is fitted with the wall of the second groove 324 increases the resistance to relative rotation between the permanent magnet 322 and the support frame 321.

As shown in FIGS. 4 to 8, the stator assembly 31 includes a first mounting part 38, and the housing 34 includes a second protruding part 341. The first mounting part 38 includes a position-limiting groove 39 extending in the radial direction of the stator assembly 31. At least a portion of the second protruding part 341 is located in the position-limiting groove 39 and is in abutment with or clearance-fit with a wall of the position-limiting groove 39. The second protruding part 341 is fixedly or position-limitedly connected to the first mounting part 38. At least a portion of the second protruding part 341 is located in the position-limiting groove 39 and is in abutment with or clearance-fit with the wall of the position-limiting groove 39, which provides circumferential restraint to the stator assembly 31, reducing the rotation of the stator assembly 31 relative to the housing 34, particularly the rotation of the stator assembly 31 relative to the housing 34 during operation of the rotor assembly 32. The position-limiting groove 39 extends in the radial direction of the stator assembly 31, so that the stator assembly 31 is substantially position-limited by the position-limiting groove 39 in the circumferential direction, lowering the risk of over-constraint. It should be noted that the expression of "the position-limiting groove 39 extends in the radial direction of the stator assembly 31" means that the extending direction of the position-limiting groove 39 is defined as a first direction, and the line connecting the first mounting part 38 to the central axis of the stator assembly 31 is defined as a second direction. An angle between the first direction and the second direction is less than 10 degrees.

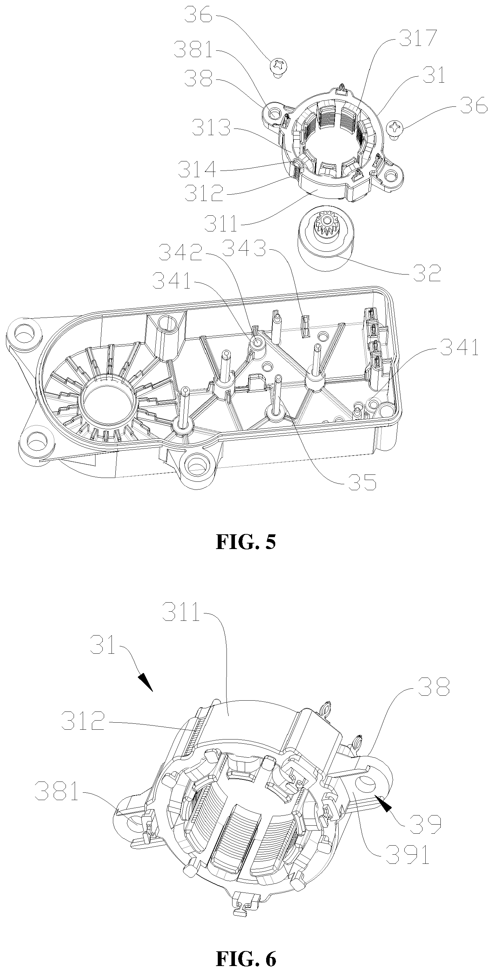

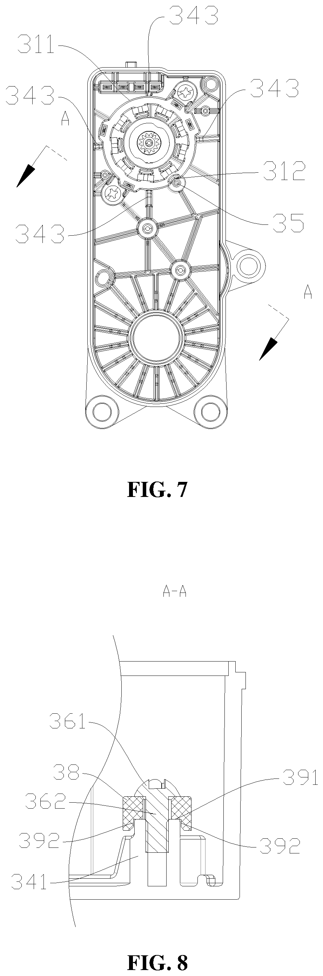

Specifically, as shown in FIG. 6 and FIG. 8, the wall of the position-limiting groove 39 includes a bottom wall 391 and two opposite side walls 392. The side walls 392 are parallel or substantially parallel to the axial direction of the stator assembly 31. In the circumferential direction of the stator assembly 31, at least a portion of the second protruding part 341 is located between the two side walls 392, and an outer circumferential part of the second protruding part 341 is in abutment with or clearance fit with the two side walls 392. In this embodiment, the outer circumferential part of the second protruding part 341 is cylindrical or quasi-cylindrical in shape. The bottom wall 391 is perpendicular or substantially perpendicular to the axial direction of the stator assembly 31, and the second protruding part 341 extends in the axial direction of the stator assembly 31. In the axial direction of the stator assembly 31, the bottom wall 391 faces and abuts against a top of the second protruding part 341, so that the stator assembly 31 may be axially position-limited. Therefore, both the circumferential and axial position-limiting structures of the stator assembly 31 are arranged at the first mounting part 38, thereby reducing the space occupied by the position-limiting structures. The expression "substantially perpendicular" means that an angle between the two ranges from 80 degrees to 100 degrees. The expression "substantially parallel" denotes that an angle between the two ranges from 0 to 10 degrees. The expression "clearance fit" in the present application denotes that a gap width between the two is less than 0.2mm.

As shown in FIGS. 5 and 8, in this embodiment, the second protruding part 341 has a first mounting hole 342, which extends from the top of the second protruding part 341 in the axial direction of the stator assembly 31. The first mounting part 38 has a first through-hole 381, which extends from the bottom wall 391 in the axial direction of the stator assembly 31. The first through-hole 381 is aligned with the first mounting hole 342. The control apparatus 3 includes a first position-limiting component 36, which has a large-diameter part 361 and a small-diameter part 362. A portion of the small-diameter part 362 is located in the first mounting hole 342, and another portion of the small-diameter part 362 is located in the first through-hole 381. In the axial direction of the stator assembly 31, at least a portion of the first mounting part 38 is located between the large-diameter part 361 and the top of the second protruding part 341, and the large-diameter part 361 abuts against the first mounting part 38. In this way, the stator assembly 31 may be axially position-limited by the large-diameter part 361 and the second protruding part 341, thereby reducing the axial vibration of the stator assembly 31 relative to the housing 34. The first position-limiting component 36 may be a screw.

The stator assembly 31 includes two first mounting parts 38. In the radial direction of the stator assembly 31, one of the two first mounting parts 38 is located on one side of the stator assembly 31, and the other first mounting part 38 is located on the other side of the stator assembly 31. The two first mounting parts 38 are symmetrically arranged about the central axis of the stator assembly 31. In this way, the stator assembly 31 may be position-limited by using as few first mounting parts 38 as possible, and the centrally symmetrical first mounting parts 38 allow for more uniform force distribution across the stator assembly 31.

As shown in FIGS. 4 to 8, the first mounting part 38 is integrally formed with the outer shell 316, which is convenient for manufacturing. The first mounting part 38 protrudes from an outer circumferential part of the stator core 315 in the radial direction of the stator assembly 31. In this way, the distance between the first mounting part 38 and the central axis of the stator assembly 31 may be increased, thereby enhancing the precision of the circumferential positioning of the stator assembly 31.

As shown in FIG. 5 and FIG. 7, the housing 34 includes at least two ribs 343 that are spaced apart in the circumferential direction of the stator assembly 31, and each of the ribs 343 extends in the radial direction of the stator assembly 31. An end of each rib 343 that is relatively close to the stator assembly 31 in the radial direction of the stator assembly 31 is in abutment with or clearance fit with the outer circumferential part 311 of the stator assembly 31. The stator assembly 31 may be radially position-limited by the ribs 343, ensuring the stator assembly 31 to be positioned more precisely relative to the housing 34. Specifically, at least two of the ribs 343 are symmetrically arranged about the central axis of the stator assembly 31, so that the pair of ribs 343 are configured to radially limit both sides of the stator assembly 31 in the same direction. The radial position-limiting of the stator assembly 31 by the ribs 34 enables a better concentricity between the stator assembly 31 and the rotor assembly 32, thereby enhancing the efficiency of the motor.

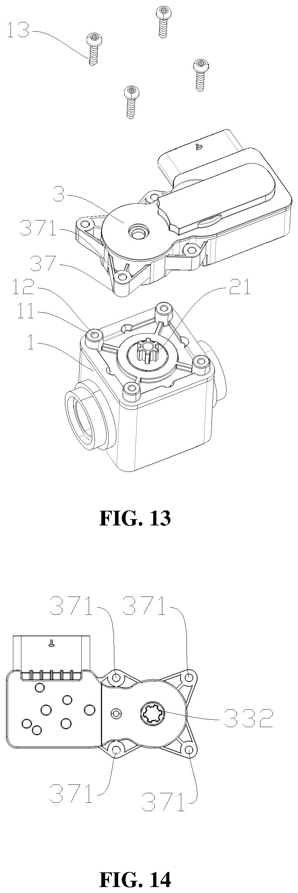

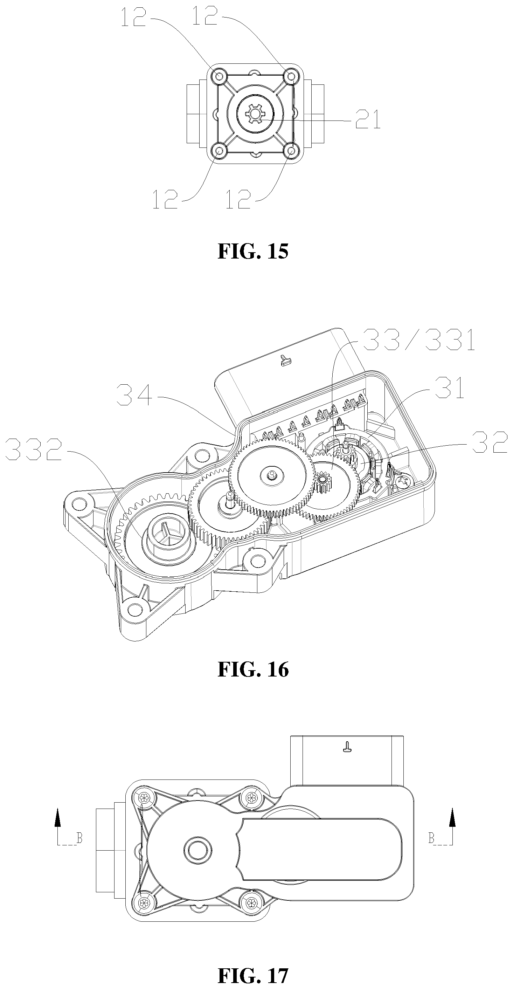

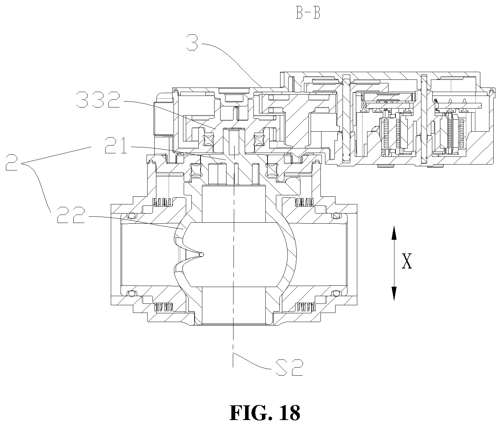

An electric valve 100 is shown in FIGS. 12 to 18, including a control apparatus 3, a valve body assembly 1 and a valve core assembly 2. At least a portion of the valve core assembly 2 is located in the valve body assembly 1, and the control apparatus 3 is fixedly or position-limitedly connected to the valve body assembly 1. The control apparatus 3 includes a housing 34, a transmission assembly 33, a stator assembly 31 and a rotor assembly 32. The valve core assembly 2 includes a valve shaft 21 and a valve ball 22. The valve shaft 21 is in transmission connection with the transmission assembly 33, thereby enabling the rotor assembly 32 to drive the valve ball 22 to rotate. A rotation axis of the valve shaft 21 is shown by S2 in FIG. 18. The housing 34 is fixedly or position-limitedly connected to the valve body assembly 1, enabling the electric valve 100 to be mounted as an integrated unit. An axial direction of the valve shaft 21 is defined as the extending direction of the rotation axis of the valve shaft 21. The axial direction of the valve shaft 21 is shown by X in FIG. 18. The structures of the stator assembly 31 and the rotor assembly 32 are the same as those of the stator assembly 31 and the rotor assembly 32 in the control apparatus 3 according to the previous embodiment, and thus will not be described in detail herein.

The housing 34 includes at least two second mounting parts 37, each of which has a second through-hole 371. The valve body assembly 1 includes a first side 11, and at least a portion of the first side 11 faces the housing 34 in the axial direction of the valve shaft 21. A portion of the valve shaft 21 protrudes from the first side 11, or a portion of the transmission assembly 33 extends from the first side 11 into the valve body assembly 1. The first side 11 includes at least three second mounting holes 12, which are rotationally symmetrically distributed around the valve shaft 21 in a circumferential direction of the valve shaft 21. At least two of the second through-holes 371 are aligned one-to-one with two of the second mounting holes 12, and the number of the second mounting holes 12 is greater than or equal to that of the second through-holes 371. In this way, the housing 34 may be rotated by at least two different angles relative to the valve body assembly 1, enabling it to better adapt to various accommodating spaces for the electric valve 100 without any changes to the components of the electric valve 100. In this embodiment, the housing 34 includes four second mounting parts 37, which are rotationally symmetrically distributed around the valve shaft 21 in the circumferential direction of the valve shaft 21. The first side 11 includes four second mounting holes 12, enabling the housing 34 to rotate by four different angles relative to the valve body assembly 1.

The control apparatus 3 includes second position-limiting components 13, with a portion of each second position-limiting component 13 located in the second mounting hole 12, and another portion of the second position-limiting component 13 located in the second through-hole 371. The second position-limiting component 13 may be a screw. The first side 11 is substantially perpendicular to the axial direction of the valve shaft 21, and the second mounting part 37 abuts against the first side 11 in the axial direction of the valve shaft 21. The transmission mechanism further includes an output gear 332, a portion of which is arranged around an outer periphery of the valve shaft 21 and is in transmission connection with the valve shaft 21.

It should be noted that the above embodiments are only used to illustrate the present application and are not intended to limit the technical solutions described in the present application. Although the present application has been described in detail in this specification with reference to the above embodiments, it should be understood that modifications or equivalent replacements to the present application can still be made by those skilled in the art, and all technical solutions and improvements thereof that do not depart from the spirit and scope of the present application should fall within the scope of the claims of the present application.

## Claims

1. A control apparatus (3), comprising:
a transmission assembly (33);
a stator assembly (31); and
a rotor assembly (32), wherein the stator assembly (31) is arranged radially outside the rotor assembly (32), and the transmission assembly (33) comprises a first gear (331) which is in transmission connection with the rotor assembly (32);
and wherein
the control apparatus (3) comprises a first shaft (35), and at least a portion of the first gear (331) is arranged radially outside of the first shaft (35); and
the stator assembly (31) comprises an outer circumferential part (311) and a first groove (312), wherein in a radial direction of the stator assembly (31), the first groove (312) is recessed at the outer circumferential part (311), and a portion of the first shaft (35) is located in the first groove (312).

2. The control apparatus according to claim 1, wherein an extending direction of the first shaft (35) is parallel to an axial direction of the stator assembly (31), and in the radial direction of the stator assembly (31), a portion of the first shaft (35) is farther away from a central axis of the stator assembly (31) than the outer circumferential part (311) of the stator assembly (31).

3. The control apparatus according to claim 1 or 2, further comprising a housing (34), wherein the housing (34) has a cavity (30), the first gear (331) is located in the cavity (30), and in the axial direction of the stator assembly (31), at least a portion of the first gear (331) is located between the housing (34) and the stator assembly (31), one end of the first gear (331) is in abutment with or clearance fit with the stator assembly (31), and the other end of the first gear (331) is in abutment with or clearance fit with a wall of the cavity (30).

4. The control apparatus according to claim 3, wherein the stator assembly (31) comprises a first end face part (313), at least a portion of which faces the first gear (331) in the axial direction of the stator assembly (31);
the stator assembly (31) comprises a first protruding part (314), which protrudes outward from the first end face part (313), a top of the first protruding part (314) is in sliding fit with the first gear (331), and the first protruding part (314) is located radially outside the first shaft (35).

5. The control apparatus according to claim 3 or 4, wherein the stator assembly (31) comprises a stator core (315) and an outer shell (316), wherein the outer shell (316) is made of insulating material, at least a portion of the outer shell (316) is located radially outside the stator core (315), and a portion of the first groove (312) is recessed at the outer circumferential part of the stator core (315) in the radial direction of the stator assembly (31).

6. The control apparatus according to claim 5, wherein the outer shell (316) is made of plastic material and is fixedly connected to the stator core (315) through an insert injection molding process;
the first gear (331) is made of plastic material, and one end of the first gear (331) is in sliding fit with the outer shell (316).

7. The control apparatus according to claim 5 or 6, wherein the stator core (315) comprises a stator yoke part (3151) and stator tooth parts (3152), and the rotor assembly (32) is surrounded by the stator yoke part (3151);
the stator yoke part (3151) comprises an inner circumferential part (3155), the inner circumferential part (3155) of the stator yoke part (3151) faces the rotor assembly (32) in the radial direction of the stator assembly (31), the inner circumferential part (3155) of the stator yoke part (3151) comprises a first side wall (3153), each stator tooth part (3152) extends from the first side wall (3153) towards the rotor assembly (32) in the radial direction of the stator assembly (31), the first side wall (3153) is planar, and the first side wall (3153) is substantially perpendicular to an extending direction of the stator tooth portion (3152); and
the stator assembly (31) comprises windings (317), which are located radially outside the stator tooth parts (3152).

8. The control apparatus according to claim 1, wherein the rotor assembly (32) comprises a support frame (321) and a permanent magnet (322), wherein the permanent magnet (322) is arranged around the support frame (321) in a circumferential direction of the support frame (321), and an inner circumferential part of the permanent magnet (322) is shaped as a quasi-cylindrical surface;
the permanent magnet (322) comprises a protrusion (323), which protrudes from the inner circumferential part of the permanent magnet (322) in a radial direction of the rotor assembly (32), and an outer circumferential part of the support frame (321) faces the inner circumferential part of the permanent magnet (322);
the support frame (321) has a second groove (324) that is recessed at the outer circumferential part of the support frame (321), and at least a portion of the protrusion (323) is located in the second groove (324) and is fitted with a wall of the second groove (324).

9. The control apparatus according to any one of claims 1 to 8, wherein the control apparatus (3) comprises a housing (34), the stator assembly (31) comprises a first mounting part (38), the housing (34) comprises a second protruding part (341), the first mounting part (38) comprises a position-limiting groove (39) extending in the radial direction of the stator assembly (31), at least a portion of the second protruding part (341) is located in the position-limiting groove (39) and is in abutment with or clearance-fit with a wall of the position-limiting groove (39), and the second protruding part (341) is connected to the first mounting part (38) in a fixed manner or a position-limited manner.

10. The control apparatus according to claim 9, wherein the wall forming the position-limiting groove (39) comprises a bottom wall (391) and two opposite side walls (392), wherein the bottom wall (391) is perpendicular or substantially perpendicular to the axial direction of the stator assembly (31), the second protruding part (341) extends in the axial direction of the stator assembly (31), and in the axial direction of the stator assembly (31), the bottom wall (391) faces and abuts against a top of the second protruding part (341);
the side walls (392) are parallel or substantially parallel to the axial direction of the stator assembly (31), and in the circumferential direction of the stator assembly (31), at least a portion of the second protruding part (341) is located between the two side walls (392), and an outer circumferential part of the second protruding part (341) is in abutment with or clearance fit with the two side walls (392).

11. The control apparatus according to claim 10, wherein the second protruding part (341) has a first mounting hole (342), which extends from the top of the second protruding part (341) in the axial direction of the stator assembly (31);
the first mounting part (38) has a first through-hole (381), which extends from the bottom wall (391) in the axial direction of the stator assembly (31), and the first through-hole (381) is aligned with the first mounting hole (342);
the control apparatus (3) comprises a first position-limiting component (36), which has a large-diameter part (361) and a small-diameter part (362), wherein a portion of the small-diameter part (362) is located in the first mounting hole (342), and another portion of the small-diameter part (362) is located in the first through-hole (381); and
in the axial direction of the stator assembly (31), at least a portion of the first mounting part (381) is located between the large-diameter part (361) and the top of the second protruding portion (341), and the large-diameter part (361) abuts against the first mounting part (38).

12. The control apparatus according to claim 9, wherein the stator assembly (31) comprises two first mounting parts (38), which are respectively located on two sides of the stator assembly (31) in the radial direction of the stator assembly (31), and the two first mounting parts (38) are symmetrically arranged about the central axis of the stator assembly (31).

13. The control apparatus according to claim 9, wherein the stator assembly (31) comprises a stator core (315) and an outer shell (316), wherein the outer shell (316) is fixedly connected to the stator core (315) through an insert injection molding process, the first mounting part (38) is integrally formed with the outer shell (316), and the first mounting part (38) protrudes from the outer circumferential part of the stator core (315) in the radial direction of the stator assembly (31).

14. The control apparatus according to claim 13, wherein the housing (34) comprises at least two ribs (343), which are spaced apart in the circumferential direction of the stator assembly (31), and at least two of the ribs (343) are symmetrically arranged about the central axis of the stator assembly (31);
each of the ribs (343) extends in the radial direction of the stator assembly (31), and in the radial direction of the stator assembly (31), an end of the rib (343) that is relatively close to the stator assembly (31) is in abutment with or clearance fit with the outer circumferential part of the stator assembly (31).

15. An electric valve (100), comprising a valve body assembly (1), a valve core assembly (2), and the control apparatus (3) according to any one of claims 1 to 14, wherein
the valve core assembly (2) comprises a valve shaft (21), which is in transmission connection with the transmission assembly (33), at least a portion of the valve core assembly (2) is located in the valve body assembly (1), and the control apparatus (3) is connected to the valve body assembly (1) in a fixed manner or a position-limited manner.
